# EUROPEAN PATENT SPECIFICATION

(11) **EP 1 281 874 B1**
(45) Date of publication and mention of the grant of the patent: **11.07.2007**
(21) Application number: 02291325.5
(22) Date of filing: 30.05.2002
(51) Int. Cl.: F16B 25/10, F16B 25/00

(54) **Threaded fastener**
Befestigungselement mit Gewinde
Elément de fixation fileté

(30) Priority: 31.07.2001 US 918656
(43) Date of publication of application: 05.02.2003
(73) Proprietor: ILLINOIS TOOL WORKS INC., Glenview, Cook County, Illinois 60025 (US)
(72) Inventor: Kram, Guenther Reinhard, Bartlett, Illinois 60103 (US); Chen, Chin-Tsai, Dan Shuei, Taipei Country 251 (TW)
(74) Representative: Bloch, Gérard

(56) References cited:
- EP-A- 1 001 178
- FR-A- 324 614
- US-A- 1 802 560
- US-A- 6 086 302

## Description

The present invention relates generally to threaded fasteners, and more particularly to a new and improved threaded fastener which has uniquely formed or fabricated saw-tooth or serrated-teeth structure integrally formed upon the peripheral edge regions of the crest portions of the lead threads of the fastener whereby the cutting performance or characteristics of the lead threads is enhanced so as to in turn facilitate and enhance the penetration or insertion rate of the fastener into a substrate, as well as the pullout resistance of the fastener, and still further, the new and improved fastener is well-adapted for threaded insertion within a plurality of different substrates, such as, for example, wood, metal, composite materials, concrete, or the like. In connection with the fabrication or manufacture of threaded fasteners, a multiplicity of different fasteners are of course well-known and are accordingly available in the marketplace: More particularly, or furthermore, the multiplicity or different varieties of threaded fasteners have been developed in accordance with various objectives, such as, for example, to enable the fasteners to achieve predetermined desired insertion and withdrawal torque characteristics, to enable the fasteners to be used in conjunction with different mounting panels, support surfaces, or substrates comprising different types of materials, to enable the fasteners to exhibit predetermined desired pull-out resistance values with respect to such panels, surfaces, or substrates, and the like. Accordingly, the threads of such fasteners are usually provided with supplemental or auxiliary structure, which seeks to achieve the aforenoted objectives. For example, as disclosed within United States Patent 5,110,245 which issued to Hiroyuki on May 5, 1992, the peripheral edge portions of the threads of the threaded fasteners 1 disclosed therein are provided with slot recesses 6 in order to render the fasteners 1 suitable for enhanced stability within thermoplastic resin substrates. In a similar manner, as disclosed within United States Patent 5,044,853 which issued to Dicke on September 3, 1991, the peripheral edge portions of the threaded fastener are provided with parabolic depressions wherein the dispositions of the depressions are effectively skewed such that the insertion torque is less than the withdrawal torque thereby rendering the screwing of the fastener into the particular substrate relatively easier than the unscrewing of the fastener from the substrate. Lastly, as disclosed within United States Patent 4,637,767 which issued to Yaotani et al. on January 20, 1987, the threads of the fastener are provided with projections 150 so as to optimise torque levels as well as pull-out resistance values. While the aforenoted exemplary threaded fasteners have performed satisfactorily and have accordingly been commercially successful, a need still exists in the art for a new and improved threaded fastener which will have new and improved structure integrally incorporated within the lead thread portions thereof whereby such lead threads can effectively cut into a diverse type of substrates in a relatively faster and smoother manner, such as, for example, wood, metal, composite materials, concrete, or the like. In addition, the lead threads can effectively cause the removal of cut material and the dispersal of the same so as to permit the following or trailing threads to easily traverse the newly formed threads which have been tapped into the substrates by means of the newly structured lead threads, and wherein, as a result of such new and improved screw fastener thread structure, the screw fastener will exhibit enhanced tapping or insertion torque characteristics, enhanced tapping and insertion speed, and improved pull-out resistance properties. Accordingly, it is an object of the present invention to provide a new and improved threaded screw fastener. Another object of the present invention is to provide a new and improved threaded screw fastener which effectively overcomes the various disadvantages and drawbacks characteristic of PRIOR ART threaded screw fasteners. An additional object of the present invention is to provide a new and improved threaded screw fastener which has new and improved cutting structure integrally incorporated within the peripheral crest regions of the leading threads such that the new and improved threaded screw fastener is uniquely adapted for use in conjunction with a multiplicity of different types of substrates such as, for example, wood, metal, composites, concrete, or the like. A further object of the present invention is to provide a new and improved threaded screw fastener which has new and improved cutting structure integrally incorporated within the peripheral crest regions of the leading threads such that the new and improved threaded screw fastener is uniquely adapted for actually cutting, removing, and dispersing material from the particular substrate during the performance of a tapping operation. A last object of the present invention is to provide a new and improved threaded screw fastener which has new and improved cutting structure integrally incorporated within the peripheral crest regions of the leading threads such that the new and improved threaded screw fastener is uniquely adapted for actually cutting, removing, and dispersing material from the particular substrate during the performance of a tapping operation such that torque insertion requirements are diminished, insertion speed is enhanced, and pull-out resistance properties are improved.

The foregoing and other objectives are achieved in accordance with the teachings and principles of the present invention through the provision of a new and improved threaded screw fastener according to claim 1.

The serrated teeth thus serve, in effect, as saw-blade type teeth which actually cut threads into the substrate walls, as opposed to in effect simply moving substrate material from the tapped regions, and the thread structure also serves to remove and disperse the cut debris such that the following or trailing thread portions can smoothly and quickly traverse the previously tapped threads. In this manner, the insertion torque level and installation time are substantially reduced, and still further, the fastener exhibits enhanced pull-out resistance values.

It should be noted that none of the fasteners of EP-A-1001178, FR-A-3246 14, US-A-6086302 and US-A-1802 560 is capable of cutting and removing material from the side wall portions of a bore in any one of a plurality of different substrates, with a fast and smooth insertion, with a reduced insertion torque and with an enhanced pull-out resistance.

Moreover, in view of the teaching of EP-A-1001178, the fastener of the instant case can be universally used.

In view of the teaching of US-A-5674035, related to a fastener with a relatively complex teeth configuration, the fastener of the instant case is easy to manufacture and capable to better displace debris.

Various other objects, features, and attendant advantages of the present invention will be more fully appreciated from the following detailed description when considered in connection with the accompanying drawings in which like reference characters designate like or corresponding parts throughout the several views, and wherein:

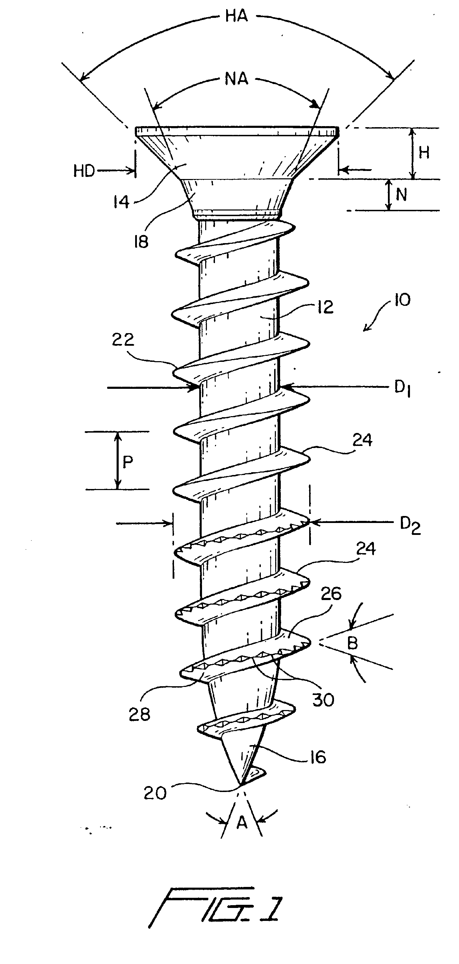

FIGURE 1 is a vertical front elevational view of a new and improved threaded screw fastener constructed in accordance with the principles and teachings of the present invention wherein the lead threads of the screw fastener are provided with the plurality of unique and novel, circumferentially arranged saw-blade type teeth upon the other peripheral edge regions of the lead thread crest portions; and

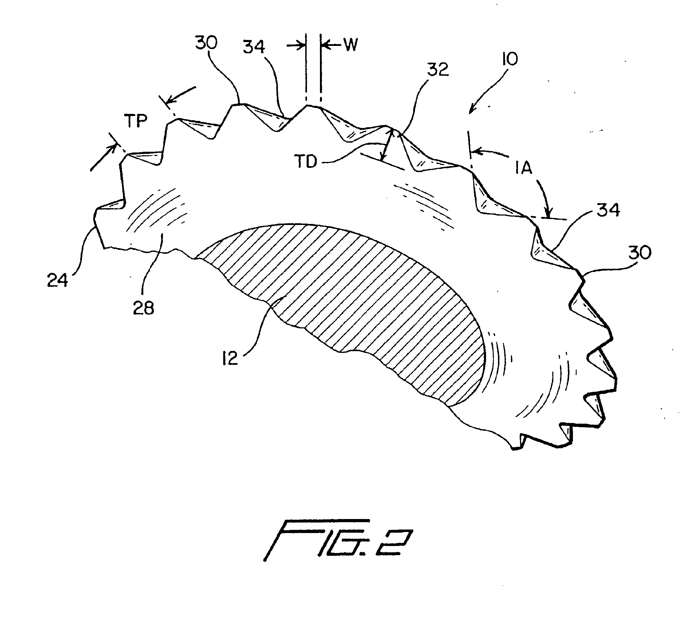

FIGURE 2 is an enlarged, partial cross-sectional, bottom perspective view of a lead thread portion of the new and improved threaded screw fastener shown in FIGURE 1, wherein the details of the saw-blade type teeth, integrally formed upon the other peripheral edge regions of the lead thread crest portions of the single continuous helical thread formed upon the threaded screw fastener so as to achieve the advantageous torque, insertion, and pull-out resistance properties characteristic of the present invention, are particularly illustrated.

Referring now to the drawings, and more particularly to FIGURE 1 thereof, a new and improved threaded screw fastener, constructed in accordance with the principles and teachings of the present invention wherein the lead threads of the screw fastener are provided with the plurality of unique and novel, circumferentially arranged saw-blade type teeth upon the outer peripheral edge regions of the lead thread crest portions so as to achieve reduced insertion torque characteristics rendering the insertion or installation procedure quicker and faster, as well as enhancing pull-out resistance values, is disclosed and is generally indicated by the reference character 10. More particularly, the threaded screw fastener 10 comprises a shank portion 12 of substantially constant diameter Di, and a tapered head portion 14 formed upon the upper end of the shank portion 12, wherein the tapered head portion 14 has an axial depth or thickness H,.a diametrical extent HD, and an included taper angle HA of approximately 85-90°. A pointed tip portion 16 is formed upon the lower end of the shank portion 12, and a tapered neck portion 18 integrally interconnects the tapered head portion 14 of the fastener 10 to the upper end of the shank portion 12. The tapered neck portion 18 has an axial depth or thickness N and an included taper angle NA of approximately 48-52°, and it is noted that the pointed tip portion 16 comprises an end point 20 at which diametrically opposite sides or planes of the pointed tip portion 16 effectively intersect each other at an angle A which is within the range of 20-25°. A single continuous helical thread 22 is formed upon the shank and tip portions 12,16 of the fastener 10, and it is noted that the individual threads 24, comprising the overall single continuous helical thread 22 and which are formed upon the constant diameter portion D₁ of the shank portion 12 so as to have a pitch P defined there between, have an external crest diameter dimension D₂. Still further, it is noted that each one of the individual threads 24 comprises an upper flank or surface 26 and a lower flank or surface 28 wherein planes defined within the upper and lower flanks or surfaces 26, 28 effectively intersect each other at an angle B which is within the range of 30-50°, and preferably has a value of 40°.In accordance with the principles and teachings of the present invention, it is further seen from FIGURE 1, and as may best be seen from FIGURE 2, that the individual leading threads 24 of the threaded screw fastener 10 are provided with unique and novel structure comprising a series of .saw-blade type or serrated teeth 30 which are integrally formed upon the outer peripheral edge regions of the leading thread crest portions 32 of the single continuous helical thread 22 formed upon the threaded screw fastener 10 so as to enable or facilitate achievement of the advantageous insertion, torque, and pull-out resistance properties characteristic of the new and improved threaded screw fastener 10. It is to be initially noted that, in connection with the provision of such unique and novel structure comprising the series of saw-blade type teeth 30 integrally formed upon the outer peripheral edge regions of the leading thread crest portions 32 of the single continuous helical thread 22 formed upon the threaded screw fastener 10, and in view of the additional fact that the threaded screw fastener 10 may have any suitable longitudinal or axial length dimension, such as, for example, between 0.625 inches and 3.50 inches, the saw-blade type teeth 30 are provided upon those individual leading threads 24 which are disposed within approximately the leading one-third or one-half axial extent of the threaded screw fastener 10 as measured from the pointed tip 20 to the head portion 14. with reference therefore now being specifically made to FIGURE 2, the detailed structure of the unique and novel series of saw-blade type teeth 30, as integrally formed upon the outer peripheral edge regions of the leading thread crest portions 32 of the single continuous helical thread 22 formed upon the threaded screw fastener 10, will now be described. More particularly, it is seen that as a result of the use of suitably specific tooling, not shown, but which may be, for example, a suitable rolling die, the outer peripheral edge regions of the leading thread crest portions 32 of the single continuous helical thread 22 have 25 the continuous series or set of saw-blade teeth 30 formed therein such that valley regions 34 interposed between adjacent ones of the saw-blade teeth 30 are defined by means of an included angle IA of approximately 100°. In addition, it is further noted that the tooth pitch TP, or in other words, the circumferential distance defined between adjacent saw-blade teeth 30, will have predetermined values, as will be noted hereinafter in connection with several fabricated examples of the new and improved threaded screw fastener 10 of the present invention, depending upon the particular diametrical size of the fastener 10, and in a similar manner, each one of the saw-blade teeth 30 will have a predetermined depth dimension TD, that is, the radial distance defined between the radially outermost tip of each tooth 30 to the base of each tooth 30, which will also accordingly vary depending upon the particular diametrical size of the fastener 10. It is lastly noted that each saw-blade tooth 30 can have a predeterminedly dimensioned width W, as measured in the peripheral or circumferential direction, which can be optimally varied so as to in fact achieve different degrees of cutting efficiency depending upon the particular substrate material into which the self-tapping fasteners 10 are being inserted.

As has been noted above, various conventionally sized threaded screw fasteners can have the unique and novel saw-blade teeth 30, constructed in accordance with the principles and teachings of the present invention, incorporated therein, and accordingly, the following examples of fasteners 10, provided with the saw-blade teeth 30 of the present invention, are set forth wherein the particular structural 25 and size characteristics of the saw-blade teeth 30, and their interoperative cooperation, will become readily apparent:

| EXAMPLE 1- A NUMBER 6 | SIZED SCREW FASTENER | |
|---|---|---|
| Head Diameter - | HD - | 6.40-6.80 mm |
| Head Thickness - | H - | 2.20 mm |
| Neck Thickness - | N - | 1.40 mm |
| Shank Diameter - | D₁ - | 2.20 mm |
| Thread Crest Diameter - | D2 - | 3.30-3.60 mm |
| Thread Pitch | p - | 1.80 mm |
| Saw-Blade Teeth Pitch - | TP - | 0.60 |
| Saw-Blade Teeth Depth - | TD - | 0.21 mm |
| Saw-Blade Teeth Included Angle - | IA - | 100 Degrees |

| EXAMPLE 2 A NUMBER 8 | SIZED SCREW FASTER | |
|---|---|---|
| Head Diameter - | HD | 7.70-8.10 mm |
| Head Thickness - | H | 2.50 mm |
| Neck Thickness - | N | 1.60 mm |
| Shank Diameter - | D1 | 2.40 mm |
| Thread Crest Diameter - | D₂ | 3.80-4.10 mm |
| Thread Pitch - | p | 2.00 mm |
| Saw-Blade Teeth.Pitch - | TP | 0.60 mm |
| Saw-Blade Teeth Depth - | TD | 0.21 mm |
| Saw-Blade Teeth Included Angle - | IA | 100 Degrees |

| EXAMPLE 3 - A NUMBER 10 | SIZED SCREW FASTENER | |
|---|---|---|
| Head Diameter - | HD - | 9.10-9.50 mm |
| Head Thickness - | H - | 2.80 mm |
| Neck Thickness - | N - | 1.80 mm |
| Shank Diameter - | Di - | 3.03 mm |
| Thread Crest Diameter - | D2 - | 4.80-5.10 mm |
| Thread Pitch - | P - | 2.60 mm |
| Saw-Blade Teeth Pitch - | TP - | 0.70 mm |
| Saw-Blade Teeth Depth - | TD - | 0.25 mm |
| Saw-Blade Teeth IncludedAngle - | IA - | 100 Degrees |

| EXAMPLE 4 - A NUMBER 12 | SIZED SCREW FASTENER | |
|---|---|---|
| Head Diameter - | HD - | 10.30-10.80 mm |
| Head Thickness - | H - | 3.10 mm |
| Neck Thickness - | N - | 2.00 mm |
| Shank Diameter - | D₁ - | 3.30 mm |
| Thread Crest Diameter - | D₂ - | 5.30-5.60 mm |
| Thread Pitch - | P - | 2.90 mm |
| Saw-Blade Teeth Pitch - | TP - | 0.70 mm |
| Saw-Blade Teeth*Depth - | TD - | 0.25 mm |
| Saw-Blade Teeth Included Angle - | IA - | 100 Degrees |

| EXAMPLE 5 A NUMBER 14 | SIZED SCREW FASTENER | |
|---|---|---|
| Head Diameter - | HD- | 11.90-12.40 mm |
| Head Thickness - | H | 3.40 mm |
| Neck Thickness - | N - | 2.20 mm |
| Shank Diameter - | D₁ - | 3.60mm |
| Thread Crest Diameter - | D_{Z} - | 5.80-6.10 mm |
| Thread Pitch - | P - | 3.10 mm |
| Saw-Blade Teeth Pitch - | TP - | 0.80 mm |
| Saw-Blade Teeth Depth - | TD - | 0.29 mm |
| Saw-Blade Teeth Included Angle - | IA - | 100 Degrees |

In connection with any one of the aforenoted examples of threaded screw fasteners 10 which may be fabricated in accordance with the principles and teachings of the present invention, it is to be emphasized that as a result of the provision of the continuous series of saw-blade teeth 30 upon the outer peripheral edge regions of the leading thread crest portions 32 of the single continuous helical thread 22, the saw-blade teeth 30 will effectively cut and remove material forming the side wall portions of bores defined within any one of a multiplicity of substrates, as opposed to simply moving or displacing the material forming the side walls of the substrate bores, as is conventionally achieved by PRIOR ART self-tapping threaded fasteners. This cutting and removal action accomplished by means of the new and improved threaded screw fastener 10 of the present invention therefore leads to a faster and smoother insertion of the fastener 10 into a particular substrate, and the fact that material is actually cut and removed from the side wall portions of the substrate bores permits the following or trailing threads to be inserted or installed more easily.

Accordingly, the overall required insertion torque levels are substantially reduced, and due to the well-defined cuts within the side walls of the substrate, the pull-out resistance values characteristic of the fasteners 10 are substantially enhanced. It is further noted that the severed and removed substrate material or debris does not present any problems with respect to the operational efficiency of the threaded fasteners 10 in view of the fart that such material or debris will be shifted toward the shank portion 12 of the fastener 10 and will also drop downwardly and collect within the bottom regions of the substrate bores. Thus, it may be seen that in accordance with the principles and teachings of the present invention, there has been provided a new and improved threaded screw fastener which has, for example, a single continuous helical thread integrally formed thereon, and wherein there has been provided, upon the outer peripheral edge regions of the leading thread crest portions of such single continuous helical thread, a plurality of contiguous saw-blade teeth which will effectively cut through side wall portions of bores formed within a particular substrate and remove such severed material, as opposed to simply moving or displacing the material forming the side walls of the substrate bores as is conventionally achieved by PRIOR ART self-tapping threaded fasteners. This cutting and removal action accomplished by means of the new and improved threaded screw fastener of the present invention therefore leads to a faster and smoother insertion of the fastener into a particular substrate, and the fact that material is actually cut and removed from the side wall portions of the substrate bores permits the following or trailing threads to be inserted or installed more easily. Accordingly, the overall required insertion torque levels are substantially reduced, and due to the well-defined cuts within the side walls of the substrate, the pull-out resistance values characteristic of the fasteners are substantially enhanced. The fasteners of the present invention are also able to be used in connection with a diversity of substrates comprising different materials, such as, for example, wood, metal, composites, concrete, and the like. Obviously, many variations and modifications of the present invention are possible in light of the above teachings. It is therefore to be understood that within the scope of the appended claims, the present invention may be practiced otherwise than as specifically described herein.

## Claims

1. A threaded fastener adapted for insertion with any one of a plurality of different types of substrate including wood, metal, composite materials, concrete and the like, comprising: a shank portion (12); a head portion (14) formed upon a first end of said shank portion, a tapered tip portion (16) formed upon a second opposite end of said shank portion; a substantially continuous single helical thread (22) formed upon said shank portion, wherein individual thread portions of said substantially continuous single helical thread comprise crest portions defining a circumferentially extending edge which is formed by upper and lower flank surfaces (26, 28) of said substantially continuous single helical thread intersecting each other at an included angle defined between said upper flank and lower flank surfaces (26, 28) being within the range of 30-50° and a plurality of substantially contiguous saw-blade type teeth (30) formed upon peripheral edge portions of said crest portions of said individual thread portions of said substantially continuous single helical thread, so as to extend substantially continuously and contiguously around the circumferential extend of said threaded screw fastener, each one of said plurality of saw-blade type teeth (30) having a substantially triangular configuration but with a crest portion having a predetermined dimensioned width (w); and valleys (34) being defined between successive ones of said plurality of substantially contiguous saw-blade type teeth ; whereby the threaded fastener can be used for insertion within diverse types of substrates, each one of said valleys comprising an included angle of 100°.

2. The threaded fastener as set forth in claim 1, wherein said plurality of substantially contiguous saw-blade type teeth (30) are only formed upon peripheral edge portions of said crest portions of leading ones of said individual thread portions of said substantially continuous single helical thread (22).

3. The threaded fastener as set forth in claim 2, wherein said leading ones of said individual thread portions of said substantially continuous single helical thread (22) comprises approximately the leading one-third to one-half of the number of individual thread portions of said substantially continuous single helical thread formed upon said shank portion of said threaded fastener.

4. The threaded fastener as set forth in claim 1, wherein said plurality of substantially contiguous sawblade type teeth (30) have a predetermined pitch defined between adjacent ones of said plurality of substantially contiguous saw-blade type teeth, and each one of plurality of substantially contiguous saw-blade type teeth has a predetermined radial depth dimension.

5. The threaded fastener as set forth in claim 4, wherein said threaded fastener comprises either one of a number six and a number eight sized threaded fastener; said predetermined pitch defined between said plurality of substantially contiguous saw-blade type teeth comprises 0.60 mm; and each one of plurality of substantially contiguous saw-blade type teeth has a predetermined depth dimension of 0.21 mm.

6. The threaded fastener as set forth in claim 4, wherein said threaded fastener comprises either one of a number ten and a number twelve sized threaded fastener; said predetermined pitch defined between said plurality of substantially contiguous saw-blade type teeth comprises 0,70 mm; and each one of plurality of substantially contiguous saw-blade type teeth has a predetermined depth dimension of 0,25 mm.

7. The threaded fastener as set forth in claim 4, wherein said threaded fastener comprises a number fourteen sized threaded fastener; said predetermined pitch defined between said plurality of substantially contiguous saw-blade type teeth comprises 0,80 mm; and each one of plurality of substantially contiguous saw-blade type teeth has a predetermined depth dimension of 0,29 mm.

8. The threaded fastener as set forth in one of claims 1 to 7, wherein said saw-blade type teeth (30) are serrated teeth.

9. The threaded fastener as set forth in one of claims 1 to 8, arranged for a fast and smooth insertion into a substrate and for cutting and removing material from the side wall portion of a substrate bore, with a reduced overall insertion torque and an enhanced pull-out resistance.

## Patentansprüche

1. Befestigungselement mit Gewinde zum Einführen in irgendeine mehrerer verschiedener Substratarten, einschließlich Holz, Metall, Verbundmaterialien, Beton und dergleichen, mit Folgendem: einem Schaftteil (12), einem an einem ersten Ende des Schaftteils ausgebildeten Kopfteil (14), einem an einem zweiten, gegenüberliegenden Ende des Schaftteils ausgebildeten, sich verjüngenden Spitzenteil (16), einem am Schaftteil ausgebildeten im Wesentlichen durchgehenden, eingängigen Schraubgewinde (22), wobei einzelne Gewindeteile des im Wesentlichen durchgehenden, eingängigen Schraubgewindes Scheitelteile, die einen sich um den Umfang erstreckenden Rand definieren, der dadurch gebildet wird, dass sich obere und untere Flankenflächen (26, 28) des im Wesentlichen durchgehenden, eingängigen Schraubgewindes an einem zwischen den oberen Flankenfläche und unteren Flankenflächen (26, 28) definierten eingeschlossenen Winkel in einem Bereich von 30 - 50° schneiden, und mehrere im Wesentlichen aneinander angrenzende sägeblattartigen Zähne (30) umfassen, die so an Umfangsrandteilen der Scheitelteile der einzelnen Gewindeteile des im Wesentlichen durchgehenden, eingängigen Schraubgewindes ausgebildet sind, dass sie sich im Wesentlichen durchgehend und aneinander angrenzend um die Umfangserstreckung des Gewinde-Schraubbefestigungselements herum erstrecken, wobei jeder der mehreren sägeblattartigen Zähne (30) eine im Wesentlichen dreieckige Konfiguration aufweist, deren Scheitelteil aber eine vorbestimmt dimensionierte Breite (W) aufweist, und wobei Täler (34) zwischen aufeinanderfolgenden der mehreren im Wesentlichen aneinander angrenzenden sägeblattartigen Zähne definiert sind, wobei das Befestigungselement mit Gewinde zum Einführen in verschiedene Substratarten verwendet werden kann, wobei jedes der Täler einen eingeschlossenen Winkel von 100° aufweist.

2. Befestigungselement mit Gewinde nach Anspruch 1, bei dem die mehreren im Wesentlichen aneinander angrenzenden sägeblattartigen Zähne (30) nur an Umfangsrandteilen der Scheitelteile von vorderen der einzelnen Gewindeteile des im Wesentlichen durchgehenden, eingängigen Schraubgewindes (22) ausgebildet sind.

3. Befestigungselement mit Gewinde nach Anspruch 2, bei dem die vorderen der einzelnen Gewindeteile des im Wesentlichen durchgehenden, eingängigen Schraubgewindes (22) ungefähr das vordere Drittel bis eine Hälfte der mehreren einzelnen Gewindeteile des am Schaftteil des Befestigungselements mit Gewinde ausgebildeten im Wesentlichen durchgehenden, eingängigen Schraubgewindes umfasst.

4. Befestigungselement mit Gewinde nach Anspruch 1, bei dem die mehreren im Wesentlichen aneinander angrenzenden sägeblattartigen Zähne (30) eine zwischen benachbarten der mehreren im Wesentlichen aneinander angrenzenden sägeblattartigen Zähne definierte vorbestimmte Teilung aufweisen und jeder der mehreren im Wesentlichen aneinander angrenzenden sägeblattartigen Zähne eine vorbestimmte radiale Tiefenabmessung aufweist.

5. Befestigungselement mit Gewinde nach Anspruch 4, das entweder ein Befestigungselement mit Gewinde mit der Größe Nummer sechs oder Nummer acht umfasst, wobei die zwischen den mehreren im Wesentlichen aneinander angrenzenden sägeblattartigen Zähnen definierte Teilung 0,60 mm umfasst und jeder der mehreren im Wesentlichen aneinander angrenzenden sägeblattartigen Zähne eine vorbestimmte Tiefenabmessung von 0,21 mm aufweist.

6. Befestigungselement mit Gewinde nach Anspruch 4, das entweder ein Befestigungselement mit Gewinde mit der Größe Nummer zehn oder Nummer zwölf umfasst, wobei die zwischen den mehreren im Wesentlichen aneinander angrenzenden sägeblattartigen Zähnen definierte Teilung 0,70 mm umfasst und jeder der mehreren im Wesentlichen aneinander angrenzenden sägeblattartigen Zähne eine vorbestimmte Tiefenabmessung von 0,25 mm aufweist.

7. Befestigungselement mit Gewinde nach Anspruch 4, das ein Befestigungselement mit Gewinde mit der Größe Nummer vierzehn umfasst, wobei die zwischen den mehreren im Wesentlichen aneinander angrenzenden sägeblattartigen Zähnen definierte Teilung 0,80 mm umfasst und jeder der mehreren im Wesentlichen aneinander angrenzenden sägeblattartigen Zähne eine vorbestimmte Tiefenabmessung von 0,29 mm aufweist.

8. Befestigungselement mit Gewinde nach einem der Ansprüche 1 bis 7, bei dem die sägeblattartigen Zähne (30) Kerbzähne sind.

9. Befestigungselement mit Gewinde nach einem der Ansprüche 1 bis 8, das für ein schnelles und gleichmäßiges Einführen in ein Substrat und zum Schneiden und Entfernen von Material von dem Seitenwandteil einer Substratbohrung bei einem verringerten Gesamteinführdrehmoment und einem verbesserten Ausziehwiderstand angeordnet ist.

## Revendications

1. Elément de fixation fileté adapté pour être inséré dans l'un quelconque d'une pluralité de types différents de substrats y compris du bois, du métal, des matériaux composites, du béton et similaire, comprenant : une portion de tige (12); une portion de tête (14) formée sur une première extrémité de ladite portion de tige, une portion de pointe effilée (16) formée sur une deuxième extrémité opposée de ladite portion de tige ; un filet hélicoïdal unique substantiellement continu (22)- formé sur ladite portion de tige, des portions de filet individuelles dudit filet hélicoïdal unique substantiellement continu comprenant des portions de crête définissant un bord s'étendant circonférentiellement qui est formé par des surfaces de flanc supérieure et inférieure (26, 28) dudit filet hélicoïdal unique substantiellement continu se coupant au niveau d'un angle inclus défini entre lesdites surfaces de flanc supérieure et inférieure (26, 28), dans la plage de 30 à 50°, et une pluralité de dents de type dents de scie substantiellement contiguës (30) formées sur des portions de bord périphériques desdites portions de crête desdites portions de filet individuelles dudit filet hélicoïdal unique substantiellement continu, de manière à s'étendre substantiellement de manière continue et contiguë autour de l'étendue circonférentielle dudit élément de fixation de vis fileté, chacune de ladite pluralité de dents de type dents de scie (30) ayant une configuration substantiellement triangulaire mais avec une portion de crête ayant une largeur (w) de dimension prédéterminée ; et des vallées (34) étant définies entre des dents successives de ladite pluralité de dents de type dents de scie substantiellement contiguës ; l'élément de fixation fileté pouvant de ce fait être utilisé pour l'insertion dans divers types de substrats, chacune desdites vallées comprenant un angle inclus de 100°.

2. Elément de fixation fileté selon la revendication 1, dans lequel ladite pluralité de dents de type dents de scie substantiellement contiguës (30) est uniquement formée sur les portions de bord périphériques desdites portions de crête des portions de filet d'attaque desdites portions de filets individuelles dudit filet hélicoïdal unique substantiellement continu (22).

3. Elément de fixation fileté selon la revendication 2, dans lequel lesdites portions de filet d'attaque desdites portions de filet individuelles dudit filet hélicoïdal unique substantiellement continu (22) constituent approximativement d'un tiers à la moitié du nombre des portions de filet individuelles d'attaque dudit filet hélicoïdal unique substantiellement continu formé sur ladite portion de tige dudit élément de fixation fileté.

4. Elément de fixation fileté selon la revendication 1, dans lequel ladite pluralité de dents de type dents de scie substantiellement contiguës (30) a un pas prédéterminé défini entre des dents adjacentes de ladite pluralité de dents de type dents de scie substantiellement contiguës, et chacune de la pluralité de dents de type dents de scie substantiellement contiguës a une dimension en profondeur radiale prédéterminée.

5. Elément de fixation fileté selon la revendication 4, dans lequel ledit élément de fixation fileté comprend soit un élément de fixation fileté de numéro dimensionnel 6 sait un élément de fixation fileté de numéro dimensionnel 8, ledit pas prédéterminé défini entre ladite pluralité de dents de type dents de scie substantiellement contiguës étant de 0,60 mm et chacune de ladite pluralité de dents de type dents de scie substantiellement contiguës a une dimension en profondeur prédéterminée de 0,21 mm.

6. Elément de fixation fileté selon la revendication 4, dans lequel ledit élément de fixation fileté comprend soit un élément de fixation fileté de numéro dimensionnel 10 soit un élément de fixation fileté de numéro dimensionnel 12, ledit pas prédéterminé défini entre ladite pluralité de dents de type dents de scie substantiellement contiguës étant de 0,70 mm et chacune de ladite pluralité de dents de type dents de scie substantiellement contiguës a une dimension en profondeur prédéterminée de 0,25 mm.

7. Elément de fixation fileté selon la revendication 4, dans lequel ledit élément de fixation fileté comprend un élément de fixation fileté de numéro dimensionnel 14 ; ledit pas prédéterminé défini entre ladite pluralité de dents de type dents de scie substantiellement contiguës étant de 0,80 mm et chacune de ladite pluralité de dents de type dents de scie substantiellement contiguës a une dimension en profondeur prédéterminée de 0,29 mm.

8. Elément de fixation fileté selon l'une quelconque des revendications 1 à 7, dans lequel lesdites dents de type dents de scie (30) sont des dents crénelées.

9. Elément de fixation fileté selon l'une quelconque des revendications 1 à 8, prévu pour une insertion rapide et aisée dans un substrat et pour couper et enlever du matériau de la portion de paroi latérale d'un trou de substrat, avec un couple d'insertion global réduit et une résistance accrue à l'extraction. '
